(19)

**Europäisches Patentamt**

**European Patent Office**

**Office européen des brevets**

(11) **EP 3 147 626 A1**

(12) **EUROPEAN PATENT APPLICATION**

(43) Date of publication:
**29.03.2017 Bulletin 2017/13**

(51) Int Cl.:
*G01B 7/00* (2006.01)    *B25J 9/16* (2006.01)

(21) Application number: **16185532.5**

(22) Date of filing: **24.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **22.09.2015 GB 201516754**

(71) Applicant: **Rolls-Royce plc**
**London SW1E 6AT (GB)**

(72) Inventors:
• **Kell, James**
 **Derby, Derbyshire DE24 8BJ (GB)**
• **Rabani, Amir**
 **Derby, Derbyshire DE24 8BJ (GB)**
• **Nagy, Adam**
 **Derby, Derbyshire DE24 8BJ (GB)**
• **Nasser, Bilal**
 **Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(54) **APPARATUS, METHODS, COMPUTER PROGRAMS, AND NON-TRANSITORY COMPUTER READABLE STORAGE MEDIUMS FOR CONTROLLING MOVEMENT OF ROBOTIC MACHINERY RELATIVE TO AN OBJECT**

(57)    Apparatus for controlling movement of robotic machinery relative to an object, the apparatus comprising: a controller configured to: control a first magnetic transmitter to provide a first magnetic field, the object being positioned at least partially within the first magnetic field; receive a first signal from a first magnetic field sensor mounted at a first location on the robotic machinery; determine a control signal for controlling the robotic machinery to move relative to the object using: the received first signal; stored data of the structure of the object; and a target location; and provide the control signal to the robotic machinery to cause at least the first location of the robotic machinery to move relative to the object.

FIG. 1

EP 3 147 626 A1

## Description

TECHNOLOGICAL FIELD

The present disclosure concerns apparatus, methods, computer programs, and non-transitory computer readable storage mediums for controlling movement of robotic machinery relative to an object.

BACKGROUND

During operation of a gas turbine engine, internal components may become worn and/or damaged over a period of time. During servicing, a borescope may be inserted into the gas turbine engine to enable an operator to inspect the internal components. However, due to the limited field of view of the borescope, the operator may struggle to identify the location of the component under examination and consequently, the images provided by the borescope cannot be associated with a component. Additionally, there is a danger that the borescope may become stuck within the gas turbine engine and it may be costly to disassemble the gas turbine engine to remove the borescope.

BRIEF SUMMARY

According to various, but not necessarily all, embodiments there is provided apparatus for controlling movement of robotic machinery relative to an object, the apparatus comprising: a controller configured to: control a first magnetic transmitter to provide a first magnetic field, the object being positioned at least partially within the first magnetic field; receive a first signal from a first magnetic field sensor mounted at a first location on the robotic machinery; determine a control signal for controlling the robotic machinery to move relative to the object using: the received first signal; stored data of the structure of the object; and a target location; and provide the control signal to the robotic machinery to cause at least the first location of the robotic machinery to move relative to the object.

The first location may be at an end of the robotic machinery. The first location may be adjacent a machine tool.

The control signal may be configured to cause at least the first location of the robotic machinery to change position and/or orientation relative to the object.

The controller may be configured to use the first signal to control a display to display at least the position of the first location on the robotic machinery relative to the structure of the object using the received first signal and the stored data of the structure of the object.

The controller may be configured to: control a second magnetic transmitter to provide a second magnetic field, the object being positioned at least partially within the second magnetic field.

The controller may be configured to: receive a second signal from a second magnetic field sensor mounted at a second location on the robotic machinery. The second location may be different to the first location. The controller may be configured to determine the control signal using the received second signal.

The second location on the robotic machinery may be at a joint of the robotic machinery.

The controller may be configured to determine the control signal using calibration data.

The calibration data may include a plurality of data values that are associated with different positions of the first location of the robotic machinery within the first magnetic field.

The controller may be configured to: control the first magnetic transmitter to provide the first magnetic field without an object being positioned within the first magnetic field; receive the first signal from the first magnetic field sensor; determine calibration data using the first signal for a position and/or an orientation of the first location within the first magnetic field.

The object may be at least a part of a gas turbine engine.

According to various, but not necessarily all, embodiments there is provided a method for controlling movement of robotic machinery relative to an object, the method comprising: controlling a first magnetic transmitter to provide a first magnetic field, the object being positioned at least partially within the first magnetic field; receiving a first signal from a first magnetic field sensor mounted at a first location on the robotic machinery; determining a control signal for controlling the robotic machinery to move relative to the object using: the received first signal; stored data of the structure of the object; and a target location; and providing the control signal to the robotic machinery to cause at least the first location of the robotic machinery to move relative to the object.

The first location may be at an end of the robotic machinery. The first location may be adjacent a machine tool.

The control signal may be configured to cause at least the first location of the robotic machinery to change position and/or orientation relative to the object.

The method may further comprise controlling a display to display at least the position of the first location on the robotic machinery relative to the structure of the object using the received first signal and the stored data of the structure of the object.

The method may further comprise controlling a second magnetic transmitter to provide a second magnetic field. The object may be positioned at least partially within the second magnetic field.

The method may further comprise receiving a second signal from a second magnetic field sensor mounted at a second location on the robotic machinery. The second location may be different to the first location. Determining the control signal may include using the received second signal.

The second location on the robotic machinery may be at a joint of the robotic machinery.

Determining the control signal may include using calibration data.

The calibration data may include a plurality of data values that are associated with different positions of the first location of the robotic machinery within the first magnetic field.

The method may further comprise: controlling the first magnetic transmitter to provide the first magnetic field without an object being positioned within the first magnetic field; receiving the first signal from the first magnetic field sensor; and determining calibration data using the first signal for a position and/or an orientation of the first location within the first magnetic field.

According to various, but not necessarily all, embodiments there is provided a computer program that, when read by a computer, causes performance of the method as described in any of the preceding paragraphs.

According to various, but not necessarily all, embodiments there is provided a non-transitory computer readable storage medium comprising computer readable instructions that, when read by a computer, cause performance of the method as described in any of the preceding paragraphs.

According to various, but not necessarily all, embodiments there is provided a signal comprising computer readable instructions that, when read by a computer, cause performance of the method as described in any of the preceding paragraphs.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

BRIEF DESCRIPTION

Embodiments will now be described by way of example only, with reference to the Figures, in which:

Fig. 1 illustrates a schematic diagram of apparatus for controlling movement of robotic machinery relative to an object according to various examples;

Fig. 2 illustrates a perspective view of apparatus for controlling movement of first robotic machinery relative to a gas turbine engine according to various examples;

Figs. 3A & 3B illustrate perspective views of apparatus for controlling movement of second robotic machinery relative to a gas turbine engine according to various examples;

Figs. 4A & 4B illustrate perspective views of apparatus for controlling movement of third robotic machinery relative to a gas turbine engine according to various examples;

Fig. 5 illustrates a schematic diagram of apparatus including a plurality of magnetic transmitters according to various examples;

Fig. 6 illustrates a flow diagram of a method for determining calibration data according to various examples;

Fig. 7 illustrates a flow diagram of a method for controlling movement of robotic machinery relative to an object according to various examples; and

Fig. 8 illustrates a schematic diagram of robotic machinery according to various examples.

DETAILED DESCRIPTION

In the following description, the terms 'connected' and 'coupled' mean operationally connected and coupled. It should be appreciated that there may be any number of intervening components between the mentioned features, including no intervening components.

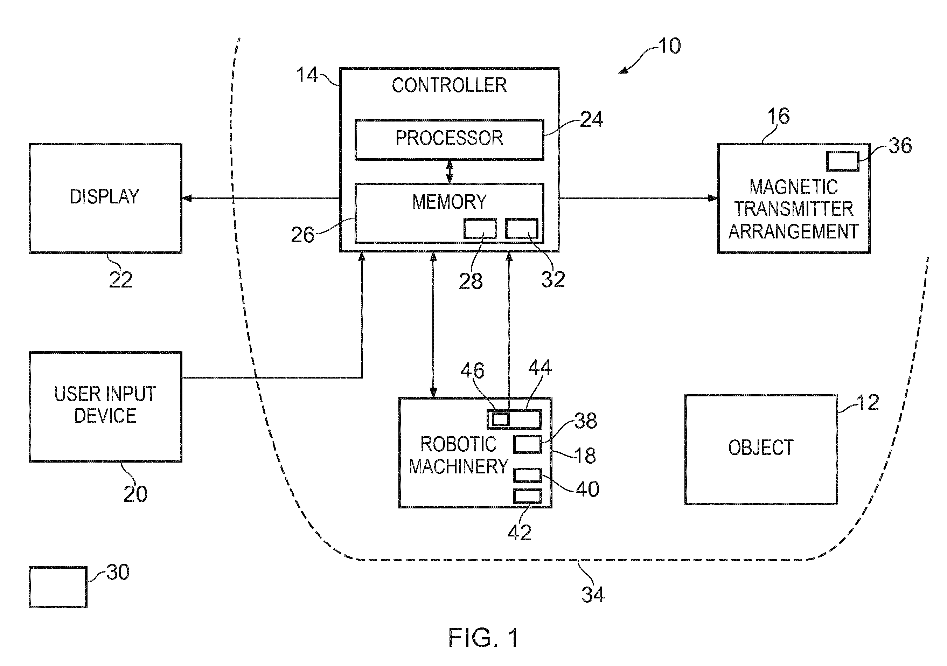

Fig. 1 illustrates a schematic diagram of an apparatus 10 according to various examples and an object 12. The apparatus 10 includes a controller 14, a magnetic transmitter arrangement 16, robotic machinery 18, a user input device 20, and a display 22. The apparatus 10 is configured to control movement of the robotic machinery 18 relative to the object 12 so that the robotic machinery 18 may machine and/or inspect the object 12.

In some examples, the apparatus 10 may be a module. As used herein, the wording 'module' refers to a device or apparatus where one or more features are included at a later time, and possibly, by another manufacturer or by an end user. For example, where the apparatus 10 is a module, the apparatus may only include the controller 14, and the remaining features (such as the magnetic transmitter arrangement 16, the robotic machinery 18, the user input device 20, and the display 22) may be added by another manufacturer, or by an end user.

The controller 14, the magnetic transmitter arrangement 16, the robotic machinery 18, the user input device 20 and the display 22 may be coupled to one another via a wireless link and may consequently comprise transceiver circuitry and one or more antennas. Additionally or alternatively, the controller 14, the magnetic transmitter arrangement 16, the robotic machinery 18, the user input device 20 and the display 22 may be coupled to one another via a wired link and may consequently comprise interface circuitry (such as a Universal Serial Bus (USB) socket). It should be appreciated that the controller 14, the magnetic transmitter arrangement 16, the robotic machinery 18, the user input device 20 and the display 22 may be coupled to one another via any combination of wired and wireless links.

The object 12 may comprise any mechanical or electro-mechanical system, or may comprise part of such a system. For example, the object 12 may comprise at least a part of a gas turbine engine. By way of another example, the object 12 may comprise at least a part of a diesel engine. By way of a further example, the object 12 may comprise at least a part of an industrial generator. By way of another example, the object 12 may comprise at least a part of a nuclear reactor.

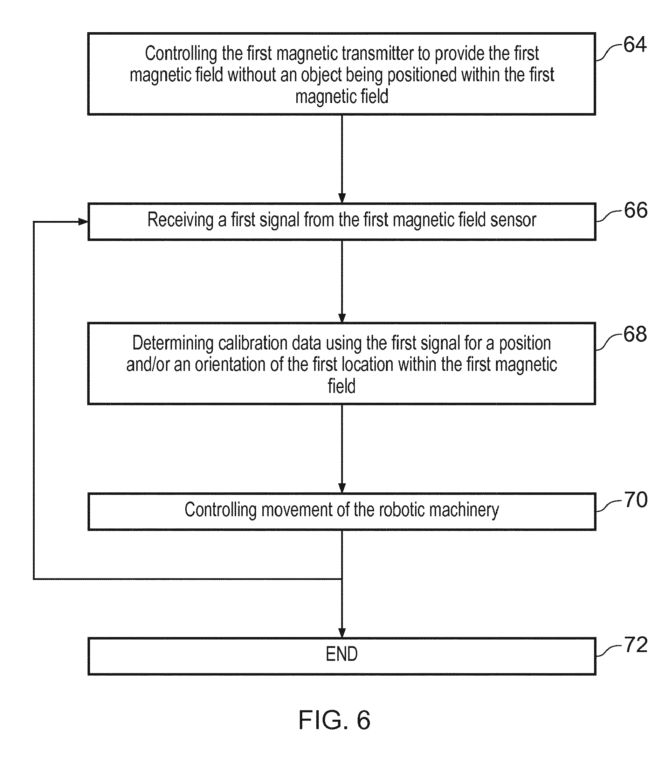

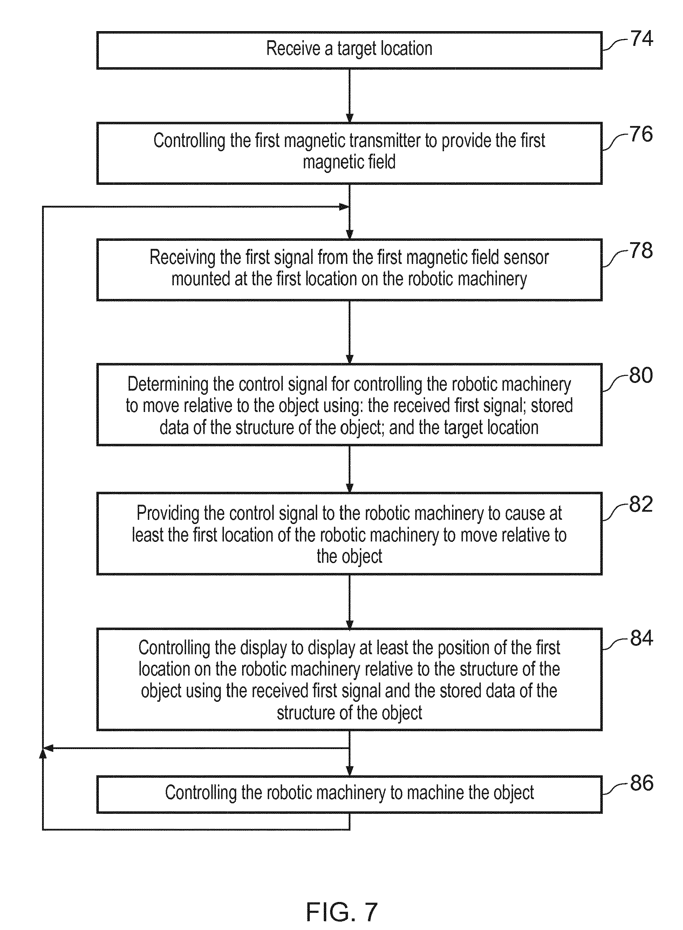

The controller 14 may comprise any suitable circuitry to cause performance of the methods described herein and as illustrated in Figs. 6 and 7. The controller 14 may be referred to as control circuitry. The controller 14 may comprise: at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU), to perform the methods.

In various examples, the controller 14 may comprise at least one processor 24 and at least one memory 26. The memory 26 stores a computer program 28 comprising computer readable instructions that, when read by the processor 24, causes performance of the methods described herein, and as illustrated in Figs. 6 and 7. The computer program 28 may be software or firmware, or may be a combination of software and firmware.

The processor 24 may include at least one microprocessor and may comprise a single core processor, may comprise multiple processor cores (such as a dual core processor or a quad core processor), or may comprise a plurality of processors (at least one of which may comprise multiple processor cores).

The memory 26 may be any suitable non-transitory computer readable storage medium, data storage device or devices, and may comprise a hard disk and/or solid state memory (such as flash memory). The memory 26 may be permanent non-removable memory, or may be removable memory (such as a secure digital (SD) card, or a universal serial bus (USB) flash drive).

The computer program 28 may be stored on a non-transitory computer readable storage medium 30. The computer program 28 may be transferred from the non-transitory computer readable storage medium 30 to the memory 26. The non-transitory computer readable storage medium 30 may be, for example, a USB flash drive, a secure digital (SD) card, an optical disc (such as a compact disc (CD)), a digital versatile disc (DVD) or a Blu-ray disc). In some examples, the computer program 28 may be transferred to the memory 26 via a wireless signal or via a wired signal.

The memory 26 also stores data 32 of the structure of the object 12. For example, the memory 26 may store one or more computer aided design (CAD) files 32 of the structure of the object 12. The data 32 may define a two dimensional (2D) structure or a three dimensional (3D) structure.

The magnetic transmitter arrangement 16 is configured to provide one or more magnetic fields 34. The object 12 is positioned at least partially within the one or more magnetic fields 34. The magnetic transmitter arrangement 16 includes at least a first magnetic transmitter 36. The controller 14 is configured to control the magnetic transmitter arrangement 16 to provide the one or more magnetic fields 34.

The robotic machinery 18 may comprise any suitable machinery for inspecting and/or machining the object 12. For example, the robotic machinery 18 may comprise: one or more motors 38 that are configured to move the robotic machinery 18 relative to the object 12; one or more imaging devices 40 (such as a charge coupled devices (CCD) camera or complementary metal oxide semiconductor (CMOS) cameras); and a machine tool 42. The controller 14 is configured to control the operation of the robotic machinery 18 and to receive data from the robotic machinery (for example, the controller 14 may be configured to receive imaging data from the imaging device 40).

The apparatus 10 also includes a magnetic field sensor arrangement 44 that is mounted on the robotic machinery 18. The magnetic field sensor arrangement 44 includes at least a first magnetic field sensor 46 that is mounted at a first location on the robotic machinery 18. The magnetic field sensor arrangement 44 is configured to sense the magnetic field generated by the magnetic transmitter arrangement 16 and to provide the sensed magnetic field to the controller 14. In one example, the magnetic field sensors 46 of the magnetic field sensor arrangement 44 comprise three separate conductive coils that are arranged orthogonal to one another so that the position and orientation of the first location on the robotic machinery 18 may be determined by the controller 14.

The user input device 20 may comprise any suitable device for enabling an operator to at least partially control the apparatus 10. For example, the user input device 20 may comprise one or more of a keyboard, a keypad, a touchpad, a touchscreen display, and a computer mouse. The controller 14 is configured to receive signals from the user input device 20.

The display 22 may be any suitable display for conveying information to an operator. For example, the display 22 may be a liquid crystal display (LCD), or a light emitting diode (LED) display, an organic light emitting diode (OLED) display or an active matrix organic light emitting diode (AMOLED) display, a thin film transistor (TFT) display, or a cathode ray tube (CRT) display. The controller 14 is arranged to provide a signal to the display 22 to cause the display 22 to convey information to the user.

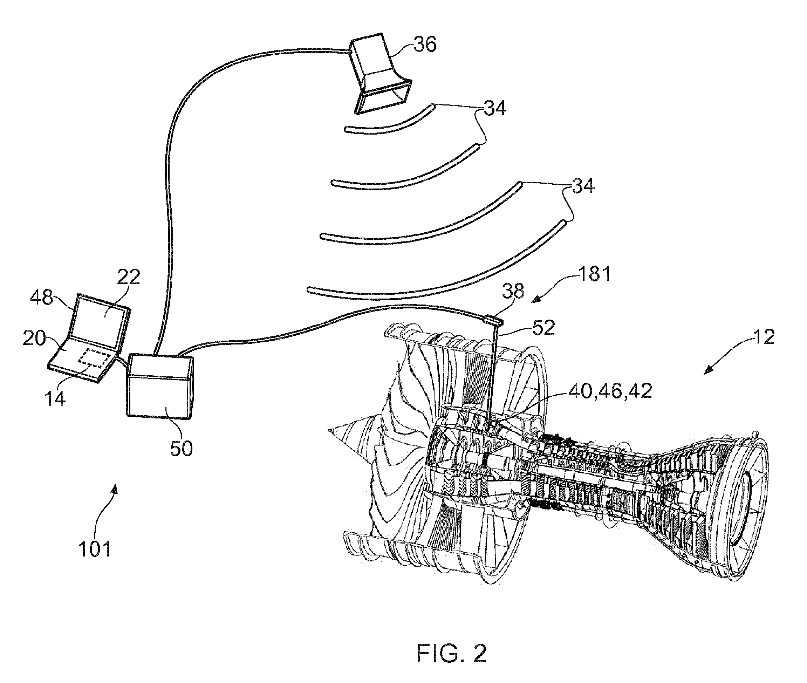

Fig. 2 illustrates a perspective view of an apparatus 101 for controlling movement of first robotic machinery 181 relative to a gas turbine engine 12. The apparatus 101 is similar to the apparatus 10 illustrated in Fig. 1 and where the features are similar, the same reference numerals are used.

The controller 14 is housed within a personal computer 48 and may be a central processing unit (CPU) of the personal computer 48. The personal computer 48 is connected to an interface unit 50 that comprises circuitry and a plurality of ports for connection to peripheral devices. In some examples, the controller 14 may be distributed between the personal computer 48 and the interface unit 50, or may be provided solely within the interface unit 50. The first magnetic transmitter 36 and the robotic machinery 181 are connected to the interface unit 50. The first robotic machinery 181 includes a rigid probe 52 having a first end connected to one or more motors 38 and a second end on which a first magnetic field sensor 46, an imaging device 40, and a machine tool 42 are mounted.

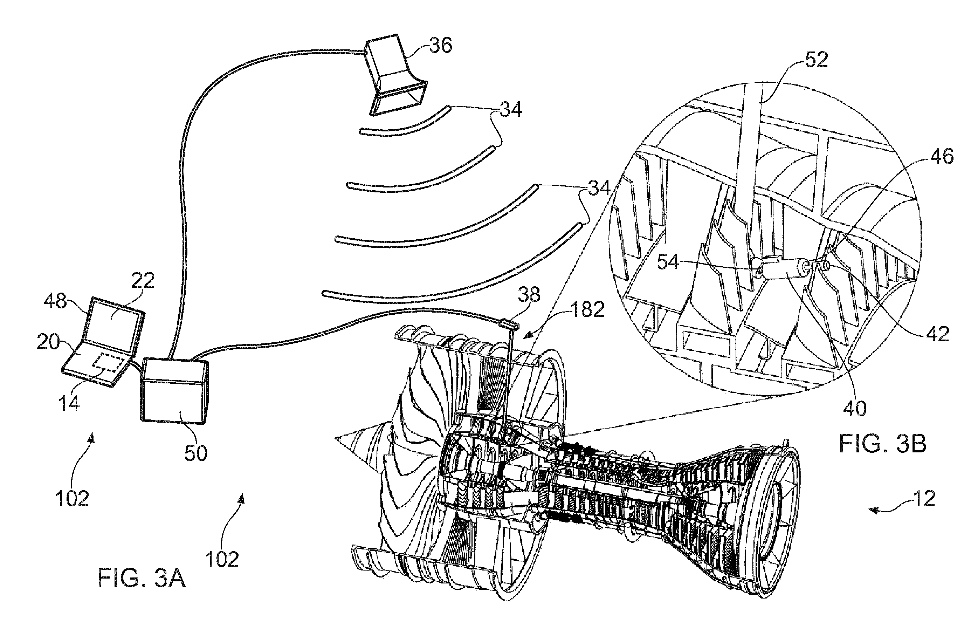

Figs. 3A & 3B illustrate perspective views of an apparatus 102 for controlling movement of second robotic machinery 182 relative to a gas turbine engine 12 according to various examples. The apparatus 102 is similar to the apparatus 10, 101 and where the features are similar, the same reference numerals are used.

The apparatus 102 differs from the apparatus 101 in that the second robotic machinery 182 includes a semi-rigid continuum based robot that comprises a rigid probe section 52 and a snake arm section 54. The rigid probe section 52 has a first end connected to a plurality of motors 38 and is connected to the snake arm section 54 at a second end. The snake arm section 54 has a first end connected to the second end of the rigid probe section 52 and a second end on which the imaging device 40, the machine tool 42 and the first magnetic field sensor 46 are mounted.

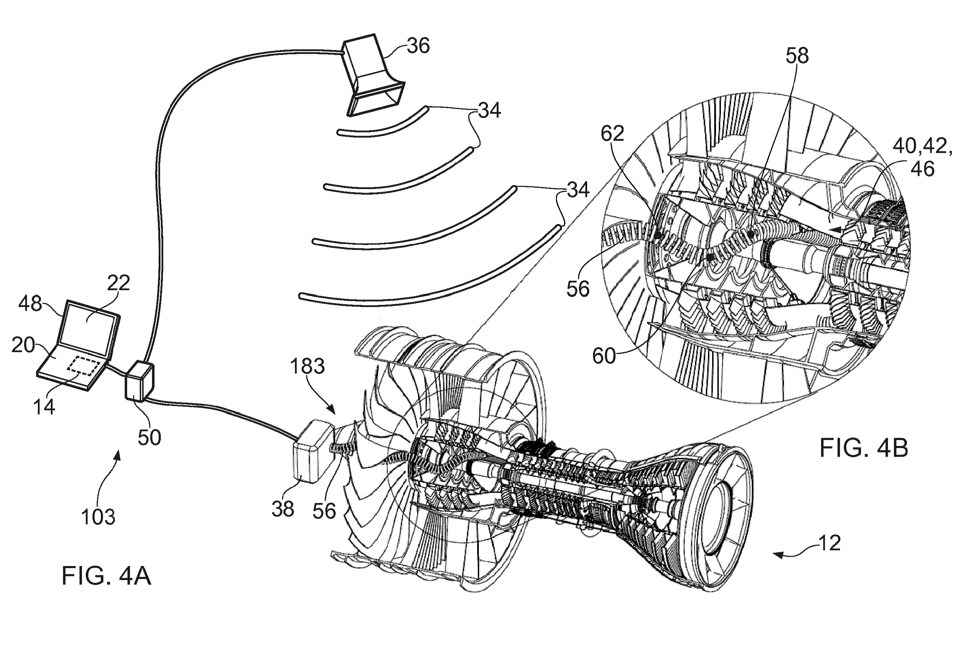

Figs. 4A & 4B illustrate perspective views of an apparatus 103 for controlling movement of third robotic machinery 183 relative to a gas turbine engine 12 according to various examples. The apparatus 103 is similar to the apparatus 10, 101, 102 and where the features are similar, the same reference numerals are used.

The apparatus 103 differs from the apparatus 101, 102 in that the third robotic machinery 183 includes a flexible continuum robot that comprises a snake arm 56. The snake arm 56 has a first end connected to a plurality of motors 38 and a second end on which the imaging device 40, the machine tool 42 and the first magnetic field sensor 46 are mounted. The apparatus 103 also differs from the apparatus 101, 102 in that the magnetic field sensor arrangement 44 includes a second magnetic field sensor 58 positioned at a second location along the snake arm 56, a third magnetic field sensor 60 positioned at a third location along the snake arm 56, and a fourth magnetic field sensor 62 positioned at a fourth location along the snake arm 56. The second location, the third locations and the fourth location may be joints of the snake arm 56.

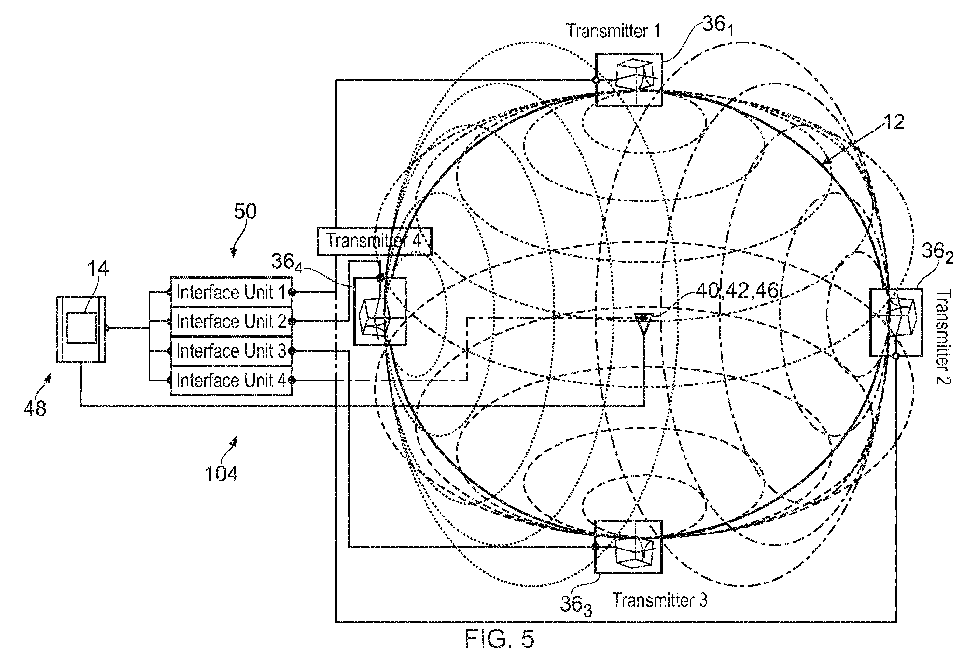

Fig. 5 illustrates a schematic diagram of an apparatus 104 including a plurality of magnetic field transmitters 36 according to various examples. In more detail, the further apparatus 104 includes a first magnetic field transmitter $36_1$, a second magnetic field transmitter $36_2$, a third magnetic field transmitter $36_3$ and a fourth magnetic field transmitter $36_4$.

The first magnetic field transmitter $36_1$, the second magnetic field transmitter $36_2$, the third magnetic field transmitter $36_3$ and the fourth magnetic field transmitter $36_4$ are positioned around the object 12 and are configured to provide magnetic fields. The object 12 is positioned within the magnetic fields generated by the first magnetic field transmitter $36_1$, the second magnetic field transmitter $36_2$, the third magnetic field transmitter $36_3$ and the fourth magnetic field transmitter $36_4$.

Fig. 6 illustrates a flow diagram of a method for determining calibration data according to various examples.

At block 64, the method includes controlling at least the first magnetic transmitter 36 to provide the first magnetic field 34 without an object being positioned within the first magnetic field 34. For example, the controller 14 may control the first magnetic transmitter 36 to provide the first magnetic field 34 when a gas turbine engine 12 is not present within the first magnetic field 34. The first magnetic field 34 may extend across an empty space that is dimensioned to receive at least a part, or the whole, of the gas turbine engine 12 therein. Furthermore, where the apparatus includes a plurality of magnetic transmitters (such as the apparatus 104), block 64 may include controlling the plurality of magnetic transmitters to provide a plurality of magnetic fields.

At block 66, the method includes receiving a first signal from at least the first magnetic field sensor 46. For example, the controller 14 may receive the first signal from the first magnetic field sensor 46. Where the apparatus includes a plurality of magnetic field sensors (such as the apparatus 103 illustrated in Figs. 4A and 4B), block 66 may include receiving a plurality of signals from the plurality of magnetic field sensors. The first location on the robotic machinery 18, 181, 182, 183 may be moved to a desired location and orientation within the magnetic field generated by the magnetic transmitter arrangement 16 at block 66, or may have been moved to a desired location and orientation within the magnetic field generated by the magnetic transmitter arrangement 16 prior to block 66.

At block 68, the method includes determining calibration data using at least the first signal (received at block 66) for the position and/or orientation of the first location on the robotic machinery 18, 181, 182, 183 within the magnetic field 34. For example, the controller 14 may determine calibration data using the first signal received from the first magnetic field sensor 46 for the position and/or orientation of the first location within the magnetic field generated by the magnetic transmitter arrangement 16. The controller 14 may associate positional and orientation data received from the one or more motors 38 of the robotic machinery 18, 181, 182, 183 with the received first signal and store the calibration data in the memory 26. In other words, the memory 26 may store the calibration data as a look-up table that includes a plurality of positions and orientations of the first location on the robotic machinery 18, 181, 182, 183 and the associated sensed magnetic field at that position and orientation.

At block 70, the method includes controlling movement of the robotic machinery 18, 181, 182, 183. For example, the controller 14 may control the robotic machinery 18, 181, 182, 183 so that the position and/or orientation of the first location on the robotic machinery 18, 181, 182, 183 changes relative to the magnetic field 34. The method may then return to block 66 so that calibration data may be determined for the new position and/or orientation. Alternatively, the method may move to block 72 and end.

Fig. 7 illustrates a flow diagram of a method for controlling movement of robotic machinery 18, 181, 182, 183 relative to an object 12 according to various examples.

At block 74, the method includes receiving a target location. For example, the controller 14 may read the data 32 of the structure of the object 12 and then control the display 22 to display an image of the object 12. An operator may operate the user input device 20 and select a target location on the image of the object 12 displayed on the display 22. By way of another example, the target location may be a predetermined location on the object 12 that it stored in the memory 26 and then read by the controller 14 at block 74.

At block 76, the method includes controlling at least the first magnetic transmitter 36 to provide the first magnetic field 34. The object 12 is positioned so that at least a part of the object 12 is positioned within the first magnetic field 34. It should be appreciated that where the magnetic transmitter arrangement 16 includes a plurality of magnetic transmitters, block 76 may include controlling the plurality of magnetic transmitters to provide a plurality of magnetic fields.

At block 78, the method includes receiving the first signal from at least the first magnetic field sensor 46 mounted at the first location on the robotic machinery 18, 181, 182, 183. For example, the controller 14 may receive the first signal from at least the first magnetic field sensor 46. It should be appreciated that where the magnetic field sensor arrangement 44 includes a plurality of magnetic field sensors (such as in the apparatus 103 illustrated in Figs. 4A and 4B), block 78 may include receiving a plurality of signals from the magnetic field sensor arrangement 44.

At block 80, the method includes determining the control signal for controlling the robotic machinery 18 to move relative to the object 12 using: the received first signal; the stored data 32 of the structure of the object; and the target location. For example, the controller 14 may use the received first signal, the stored data 32 of the structure of the object, and the target location to generate a control signal for the robotic machinery 18. In some examples, the controller 14 may determine the control signal by additionally using the calibration data stored in the memory 26 (the calibration data having been determined according to the method described above and illustrated in Fig. 6). Furthermore, the controller 14 may determine the control signal by additionally using information concerning the mechatronics of the robotic machinery 18, 181, 182, 183.

In various examples, the controller 14 may determine the control signal according to the following algorithm:

$$Y = J(x_d - MY) + d \qquad \text{Equation 1}$$

Y is the output of the controller 14 and comprises the required parameters to control the one or more motors 38 to move the robotic machinery 18, 181, 182, 183 relative to the object 12 and towards the target location.

$x_d$ defines the initial state of the robotic machinery 18, 181, 182, 183 and includes parameters for the position and orientation of the robotic machinery 18, 181, 182, 183. The controller 14 may determine $x_d$ using the first signal received at block 78.

J is the transformation component that returns the variables to move the robotic machinery 18, 181, 182, 183 from the current position to the target location. J may be calculated by the controller 14 using the data 32 of the structure of the object 12 and the distance of the robotic machinery 18, 181, 182, 183 to the object 12. The distance of the robotic machinery 18, 181, 182, 183 to the object 12 may be determined from the data 32 (using the current position and orientation and the target location position and orientation) and/or from data received from an imaging system within the object 12 and/or from other sensor inputs.

d is the disturbance error and may be determined from the calibration data. d may be represented as a coefficient index or by a more complex equation. d may be variable with movement of the magnetic field sensor arrangement 44 due to noise caused by the variance of the structure of the object 12 along the path of the magnetic field sensor arrangement 44. Self-adapt algorithms may be applied to evaluate and optimise the disturbance error value such as genetic algorithms, parameter optimisation and classification techniques.

M is the optimisation component which forms a feedback within the algorithm and takes into account the mechatronics of the robotic machinery (that is, M takes into account the physical abilities of the robotic machinery). M verifies the system behaviour by using the signals received from the magnetic field sensor arrangement 44. M may be determined by comparing the actual location of a magnetic field sensor (such as the first magnetic field sensor 46 for example) with the signal received from that magnetic field sensor and the difference there between (MY in the above mentioned algorithm) is fed back as a correction input. Different methods may be applied to determine M including regression analysis, polynomial calculations, and advanced machine learning.

At block 82, the method includes providing the control signal to the robotic machinery 18, 181, 182, 183 to cause at least the first location on the robotic machinery 18, 181, 182, 183 to move relative to the object 12. For example, the controller 14 may provide a control signal to the one or more motors 38 to control the movement of the robotic machinery 18, 181, 182, 183 relative to the object 12. The control signal provided by the controller 14 may cause the first location on the robotic machinery 18, 181, 182, 183 to change position and/or orientation relative to the object 12.

At block 84, the method may include controlling the display 22 to display at least the position of the first location on the robotic machinery 18, 181, 182, 183 relative to the structure of the object 12 using the received first signal and the stored data 32 of the structure of the object 12. For example, the controller 14 may control the display 22 to display the determined position of the first location on the robotic machinery 18, 181, 182, 183 on a computer aided design (CAD) image of the object 12.

Where the position of the first location is not the same as the target location, the method returns to block 78. Where the position of the first location is the same as the target location (that is, where the machine tool 42 and/or imaging device 40 have reached the target location), the method moves to block 86 and includes controlling the robotic machinery 18, 181, 182, 183 to machine the object 12. For example, the controller 14 may control the machine tool 42 to machine the object 12 at the target location. At block 86, the method may additionally or alternatively include receiving one or more images from the imaging device 40. For example, the controller 14 may receive one or more images of the target location from the imaging device 40 and then control the display 22 to display the one or more images for inspection by the operator.

The method may then return to block 78 so that the robotic machinery 18, 181, 182, 183 may be moved to a second target location so that the object 12 may be inspected and/or machined. Alternatively, the method may return to block 78 so that the robotic machinery 18, 181, 182, 183 may be retracted from the object 12 and so that the method may end.

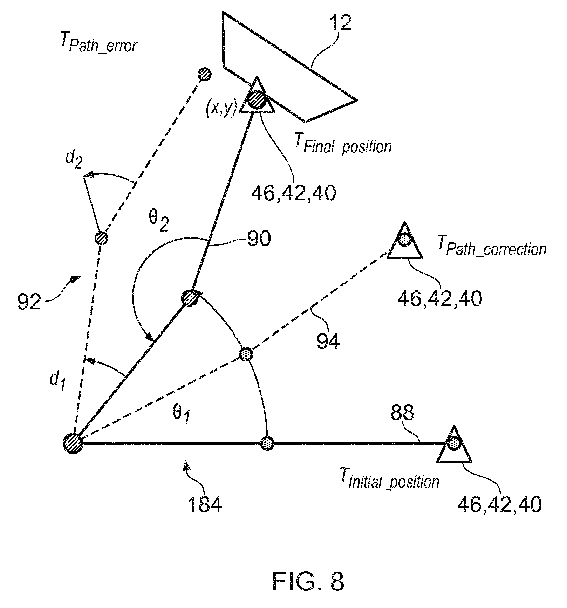

Fig. 8 illustrates a schematic diagram of fourth robotic machinery 184 being controlled in accordance with the present disclosure, and an object 12. The fourth robotic machinery 184 has a first end connected to a plurality of motors 38, and a second end on which the first magnetic field sensor 46, the machine tool 42 and the imaging device 40 are mounted. The fourth robotic machinery 184 also includes a joint between the first end and the second end about which the second end may pivot relative to the first end. A second magnetic field sensor may be mounted at the joint in some examples.

Initially, the fourth robotic machinery 184 is positioned and oriented as indicated by reference numeral 88. The controller 14 determines the initial position and orientation of the fourth robotic machinery 184 at block 80 using at least the first signal received from the first magnetic field sensor 46. The initial position and orientation are defined by $x_d$ in equation 1 above.

Reference numeral 90 indicates the desired movement and orientation of the fourth robotic machinery 184 in order to reach the target location on the object 12 and is defined by J in equation 1 above. In particular, J comprises the calculated joint rotation angles and position in order for the fourth robotic machinery 184 to the target location. J may be determined from the data 32 of the structure of the object 12 stored in the memory 26 and the kinematic mathematical equation of the fourth robotic machinery 184.

d (including $d_1$ and $d_2$) is the coefficient index to reduce or eliminate the noise error on the signal received from the magnetic field sensor arrangement 44 that is generated by the work environment. d is determined by the controller 14 from the calibration data (generated in accordance with the method illustrated in Fig. 6 and described in the preceding paragraphs). The controller 14 may determine d by using a cross correlation technique to determine the difference of the signal from the magnetic field sensor arrangement 44 between the noise free environment (that is, the environment during calibration in Fig. 6) and the work environment (that is, where the object 12 is present in the magnetic field 34).

M adjusts d on each iteration of movement of the fourth robotic machinery 184 to match the signal from the magnetic field sensor arrangement 44. The controller 14 may use Least Square Regression analysis to compare the difference between the previously performed operations and to adjust d to provide higher reliability.

The control signal from the controller 14 (Y in equation 1) includes joint rotation angles and positioning for the fourth robotic machinery 184 to control the movement of the fourth robotic machinery 184. It should be appreciated that the path of motion of the fourth robotic machinery 184 is continuously corrected throughout the iterative process until the second end of the fourth robotic machinery reaches the target location.

Reference numeral 88 indicates the position and orientation of the fourth robotic machinery 184 ($T_{path\_error}$) that is obtained by using equation 1 without using the closed loop mechanism (that is, without the MY term in equation 1). The error between $T_{path\_error}$ and $T_{Final\_position}$ is caused by environmental and mechatronic factors. After applying the closed loop mechanism, the path of the fourth robotic machinery 184 is adjusted with $T_{Path\_correction}$ indicated by reference numeral 90.

The apparatus 10, 101, 102, 103, 104 may provide several advantages. First, the apparatus 10, 101, 102, 103, 104 may enable accurate machining of an object 12 since the motion of the robotic machinery to the target location may be controlled by the controller 14. Second, the apparatus 10, 101, 102, 103, 104 may enable accurate inspection of the object 12 since the position and orientation of the robotic machinery may be determined from signals received from the magnetic field sensor arrangement 44 and then displayed on the display 22. Third, the apparatus 10, 101, 102, 103, 104 may reduce the likelihood of a borescope becoming jammed within an object 12 and thus the cost associated with releasing the borescope from within the object 12.

It will be understood that the invention is not limited to the embodiments above-described and various modifications and improvements can be made without departing from the concepts described herein.

Except where mutually exclusive, any of the features may be employed separately or in combination with any other features and the disclosure extends to and includes all combinations and sub-combinations of one or more features described herein.

**Claims**

1.  Apparatus for controlling movement of robotic machinery relative to an object, the apparatus comprising:

    a controller configured to:

    control a first magnetic transmitter to provide a first magnetic field, the object being positioned at least partially within the first magnetic field;
    receive a first signal from a first magnetic field sensor mounted at a first location on the robotic machinery;
    determine a control signal for controlling the robotic machinery to move relative to the object using: the received first signal; stored data of the structure of the object; and a target location; and
    provide the control signal to the robotic machinery to cause at least the first location of the robotic machinery to move relative to the object.

2.  Apparatus as claimed in claim 1, wherein the controller is configured to: control a second magnetic transmitter to provide a second magnetic field, the object being positioned at least partially within the second magnetic field.

3.  Apparatus as claimed in claim 1 or 2, wherein the controller is configured to: receive a second signal from a second magnetic field sensor mounted at a second location on the robotic machinery, the second location being different to the first location; wherein the controller is configured to determine the control signal using the received second signal.

4.  Apparatus as claimed in claim 3, wherein the second location on the robotic machinery is at a joint of the robotic machinery.

5.  Apparatus as claimed in any of the preceding claims, wherein the controller is configured to determine the control signal using calibration data.

6. Apparatus as claimed in claim 5, wherein the calibration data includes a plurality of data values that are associated with different positions of the first location of the robotic machinery within the first magnetic field.

7. Apparatus as claimed in claim 5 or 6, wherein the controller is configured to: control the first magnetic transmitter to provide the first magnetic field without an object being positioned within the first magnetic field; receive the first signal from the first magnetic field sensor; determine calibration data using the first signal for a position and/or an orientation of the first location within the first magnetic field.

8. Apparatus as claimed in any of the preceding claims, wherein the object is at least a part of a gas turbine engine.

9. A method for controlling movement of robotic machinery relative to an object, the method comprising:

controlling a first magnetic transmitter to provide a first magnetic field, the object being positioned at least partially within the first magnetic field;
receiving a first signal from a first magnetic field sensor mounted at a first location on the robotic machinery;
determining a control signal for controlling the robotic machinery to move relative to the object using: the received first signal; stored data of the structure of the object; and a target location; and
providing the control signal to the robotic machinery to cause at least the first location of the robotic machinery to move relative to the object.

10. A method as claimed in claim 9, further comprising receiving a second signal from a second magnetic field sensor mounted at a second location on the robotic machinery, the second location being different to the first location; and wherein determining the control signal includes using the received second signal.

11. A method as claimed in claim 10, wherein the second location on the robotic machinery is at a joint of the robotic machinery.

12. A method as claimed in any of claims 9 to 11, wherein determining the control signal includes using calibration data.

13. A method as claimed in claim 12, wherein the calibration data includes a plurality of data values that are associated with different positions of the first location of the robotic machinery within the first magnetic field.

14. A method as claimed in claim 12 or 13, further comprising: controlling the first magnetic transmitter to provide the first magnetic field without an object being positioned within the first magnetic field; receiving the first signal from the first magnetic field sensor; and determining calibration data using the first signal for a position and/or an orientation of the first location within the first magnetic field.

15. A computer program that, when read by a computer, causes performance of the method as claimed in any of claims 9 to 14.

FIG. 1

FIG. 2

FIG. 3A

FIG. 3B

EP 3 147 626 A1

FIG. 4A

FIG. 4B

EP 3 147 626 A1

FIG. 5

Controlling the first magnetic transmitter to provide the first magnetic field without an object being positioned within the first magnetic field ⟋64

Receiving a first signal from the first magnetic field sensor ⟋66

Determining calibration data using the first signal for a position and/or an orientation of the first location within the first magnetic field ⟋68

Controlling movement of the robotic machinery ⟋70

END ⟋72

FIG. 6

Receive a target location ⌐74

Controlling the first magnetic transmitter to provide the first magnetic field ⌐76

Receiving the first signal from the first magnetic field sensor mounted at the first location on the robotic machinery ⌐78

Determining the control signal for controlling the robotic machinery to move relative to the object using: the received first signal; stored data of the structure of the object; and the target location ⌐80

Providing the control signal to the robotic machinery to cause at least the first location of the robotic machinery to move relative to the object ⌐82

Controlling the display to display at least the position of the first location on the robotic machinery relative to the structure of the object using the received first signal and the stored data of the structure of the object ⌐84

Controlling the robotic machinery to machine the object ⌐86

FIG. 7

$T_{Path\_error}$

12

$(x,y)$

$T_{Final\_position}$

$d_2$

46,42,40

$\theta_2$

90

$T_{Path\_correction}$

92

46,42,40

94

$d_1$

$\theta_1$

88

184

$T_{Initial\_position}$

46,42,40

FIG. 8

Europäisches
Patentamt

European
Patent Office

Office européen
des brevets

## EUROPEAN SEARCH REPORT

Application Number

EP 16 18 5532

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/108988 A1 (LUDWIN DORON MOSHE [IL] ET AL) 3 May 2012 (2012-05-03)<br>* abstract *<br>* figure 1 *<br>* paragraphs [0034] - [0039] *<br>----- | 1-15 | INV.<br>G01B7/00<br>B25J9/16 |
| A | US 2015/164596 A1 (ROMO ENRIQUE [US] ET AL) 18 June 2015 (2015-06-18)<br>* abstract *<br>* figure 26 *<br>* paragraph [0197] *<br>----- | 1-15 | |
| A | US 2008/200807 A1 (WRIGHT JEFFREY L [US] ET AL) 21 August 2008 (2008-08-21)<br>* abstract *<br>* figure 1 *<br>* paragraph [0044] *<br>----- | 1-15 | |
| A | US 2009/154293 A1 (SENGUPTA ANANDRAJ [IN] ET AL) 18 June 2009 (2009-06-18)<br>* abstract *<br>* figure 1 *<br>* paragraphs [0018] - [0025] *<br>----- | 1-15 | TECHNICAL FIELDS SEARCHED (IPC)<br><br>G05B<br>G01B |
| A | US 2014/195052 A1 (TSUSAKA YUKO [JP] ET AL) 10 July 2014 (2014-07-10)<br>* abstract *<br>* figure 5 *<br>* paragraphs [0155] - [0283] *<br>----- | 1-15 | A61B<br>F01D<br>G01S<br>B25J |

The present search report has been drawn up for all claims

| Place of search | Date of completion of the search | Examiner |
|---|---|---|
| The Hague | 7 February 2017 | Hageman, Elodie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 18 5532

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2017

| Patent document cited in search report | | Publication date | Patent family member(s) | | | Publication date |
|---|---|---|---|---|---|---|
| US 2012108988 | A1 | 03-05-2012 | AU | 2011239365 | A1 | 17-05-2012 |
| | | | CA | 2756479 | A1 | 03-05-2012 |
| | | | CN | 102551876 | A | 11-07-2012 |
| | | | EP | 2449996 | A2 | 09-05-2012 |
| | | | IL | 215744 | A | 24-09-2015 |
| | | | JP | 6042062 | B2 | 14-12-2016 |
| | | | JP | 2012096036 | A | 24-05-2012 |
| | | | US | 2012108988 | A1 | 03-05-2012 |
| US 2015164596 | A1 | 18-06-2015 | CN | 105939647 | A | 14-09-2016 |
| | | | EP | 3060157 | A1 | 31-08-2016 |
| | | | JP | 2017502709 | A | 26-01-2017 |
| | | | KR | 20160105773 | A | 07-09-2016 |
| | | | US | 2015119637 | A1 | 30-04-2015 |
| | | | US | 2015119638 | A1 | 30-04-2015 |
| | | | US | 2015164594 | A1 | 18-06-2015 |
| | | | US | 2015164595 | A1 | 18-06-2015 |
| | | | US | 2015164596 | A1 | 18-06-2015 |
| | | | WO | 2015061756 | A1 | 30-04-2015 |
| US 2008200807 | A1 | 21-08-2008 | NONE | | | |
| US 2009154293 | A1 | 18-06-2009 | CN | 101470102 | A | 01-07-2009 |
| | | | DE | 102008055528 | A1 | 25-06-2009 |
| | | | JP | 2009150883 | A | 09-07-2009 |
| | | | US | 2009154293 | A1 | 18-06-2009 |
| US 2014195052 | A1 | 10-07-2014 | JP | 2014148037 | A | 21-08-2014 |
| | | | US | 2014195052 | A1 | 10-07-2014 |

EPO FORM P0459

For more details about this annex : see Official Journal of the European Patent Office, No. 12/82